# EUROPÄISCHE PATENTANMELDUNG

(11) **EP 4 364 923 A1**
(43) Veröffentlichungstag der Anmeldung: **08.05.2024**
(21) Anmeldenummer: 23206561.5
(22) Anmeldetag: 27.10.2023
(51) Int. Cl.: B29C 45/27, B29C 45/28

(54) **KALTKANALSYSTEM FÜR EIN SPRITZGUSSSYSTEM UND SPRITZGUSSSYSTEM**

(30) Priorität: 29.10.2022 DE 102022128795
(71) Anmelder: Günther Heisskanaltechnik GmbH, 35066 Frankenberg (DE)
(72) Erfinder: SOMMER, Siegrid, 35099 Burgwald (DE); SOMMER, Stefan, 35099 Burgwald (DE); SCHNELL, Torsten, 35104 Lichtenfels-Münden (DE); KWIATKOWSKI, Marco, 35099 Burgwald (DE)
(74) Vertreter: Patentanwälte Olbricht Buchhold Keulertz

(57) **Zusammenfassung**

Die vorgestellte Erfindung betrifft Kaltkanalsystem (1000) für ein Spritzgusssystem (400) zum Verarbeiten einer fließfähigen Masse, wobei das Kaltkanalsystem (1000) umfasst ein Antriebsmodul (200), einen Bewegungsraum (203), ein Betätigungselement (205), eine Anzahl Düsennadeln (207), einen Zuführkanal (209) und einen Flansch (211), wobei der Flansch (211) in dem Bewegungsraum (203) ausgebildet ist und einen Zuführkanal (209) umfasst, der eine Einlassöffnung (213) zum Einführen von fließfähiger Masse mit einer Auslassöffnung (215) zum Ausführen von fließfähiger Masse fluidleitend verbindet, wobei die Düsennadeln (207) mit dem Betätigungselement (205) verbunden sind, und wobei das Betätigungselement (205) in dem Bewegungsraum (203) an dem Flansch (211) entlang beweglich angeordnet ist, so dass eine Bewegung des Betätigungselements (205) zu einer Bewegung der Düsennadeln (207) führt.

## Beschreibung

Die vorliegende Erfindung betrifft ein Kaltkanalsystem für ein Spritzgusssystem sowie ein Spritzgusssystem gemäß den beigefügten Ansprüchen.

Spritzgusssysteme, insbesondere Kaltkanalspritzgusssysteme, sind allgemein bekannt. Sie werden in Spritzgießwerkzeugen eingesetzt und besitzen eine oder mehrere Spritzgießdüsen, die als Dosiereinheiten spezielle fließfähige Massen, wie beispielsweise LSR (Liquid Silicone Rubber) oder andere Elastomere bei einer definierten Temperatur sowie unter Druck einem trennbaren Werkzeugblock (Formnest) zuführen. Damit die fließfähige Masse nach einem Spritzvorgang nicht weiter aus den Düsen des Spritzgusssystems austreten kann, sind Verschlussnadeln (Düsennadeln) vorgesehen, die jeweils zugeordnete Angussöffnungen in den Spritzgießdüsen oder im Werkzeug öffnen und verschließen.

Derartige Spritzgusssysteme und deren Kaltkanalsysteme haben aufgrund der Anordnung von Verteilerplatten, der Spritzgießdüsen, der Verschlussnadeln, einem Antrieb für die Verschlussnadeln sowie weiterer Werkzeugkomponenten meist einen relativ großen Platzbedarf, was in einigen Anwendungen zu Problemen führt, insbesondere in kleineren Spritzgießwerkzeugen.

Bei der Verarbeitung von Elastomeren in Kaltkanalspritzgusssystemen ist es zudem erforderlich, dass die Fließkanäle in den Verteilerplatten und den Spritzgießdüse für die zu verarbeitende fließfähige Masse regelmäßig gereinigt werden müssen. Diese Reinigung ist bei komplexen Fließkanalgeometrien oft nur mit großem Aufwand möglich und entsprechend kostenintensiv.

Ziel der Erfindung ist es, diese und weitere Nachteile des Standes der Technik zu überwinden und ein Kaltkanalsystem zu schaffen, das mit geringen Abmessungen äußerst kompakt aufgebaut ist und auch bei sehr engen Platzverhältnissen eingesetzt werden kann. Die vorgestellte Erfindung dient ferner dazu, ein Kaltkanalsystem bereitzustellen, das eine vorgegebene Temperaturverteilungscharakteristik aufweist sowie einfach zu handhaben und zu reinigen ist. Die vorgestellte Erfindung dient ferner dazu, ein Kaltkanalspritzgusssystem bereitzustellen, das kosteneffizient herstell- und montierbar ist.

Hauptmerkmale der Erfindung sind in Anspruch 1 und 15 angegeben. Ausgestaltungen sind Gegenstand der Ansprüche 2 bis 14.

Gemäß einem ersten Aspekt der vorgestellten Erfindung wird ein Kaltkanalsystem für ein Kaltkanalspritzgusssystem zum Verarbeiten einer fließfähigen Masse vorgestellt.

Unter einem Kaltkanalkanalspritzgusssystem ist im Kontext der vorgestellten Erfindung ein Spritzgusssystem zu verstehen, das nicht aktiv beheizt wird, sondern mit bei Raumtemperatur flüssigem Material, wie bspw. LSR betrieben wird. Da LSR bei Raumtemperatur sehr flüssig ist und stark kriecht, ist ein dichtes und leicht zu reinigendes Kaltkanalsystem zum Verteilen des Materials in bspw. ein Werkzeug, erforderlich.

Das vorgestellte Kaltkanalsystem umfasst ein Antriebsmodul, einen Bewegungsraum, ein Betätigungselement, eine Anzahl Düsennadeln, einen Zuführkanal und einen Flansch, wobei der Flansch in dem Bewegungsraum ausgebildet ist und einen Zuführkanal umfasst, der eine Einlassöffnung zum Einführen von fließfähiger Masse mit einer Auslassöffnung zum Ausführen von fließfähiger Masse fluidleitend verbindet, wobei die Düsennadeln mit dem Betätigungselement verbunden sind, und wobei das Betätigungselement in dem Bewegungsraum an dem Flansch entlang beweglich angeordnet ist, so dass eine Bewegung des Betätigungselements zu einer Bewegung der Düsennadeln führt.

Das vorgestellte Kaltkanalsystem basiert auf einem Antriebsmodul zum Bewegen von Düsennadeln, wodurch ein Ausströmen von fließfähiger Masse aus entsprechenden Düsen gesteuert werden kann.

Zum Bewegen der Düsennadeln umfasst das erfindungsgemäß vorgesehene Antriebsmodul ein Betätigungselement, wie bspw. einen Ringkolben, der in einem Bewegungsraum angeordnet ist. Dies bedeutet, dass das Betätigungselement zwischen einem oberen Totpunkt und einem unteren Totpunkt beweglich in dem Bewegungsraum gelagert ist.

In dem Bewegungsraum des Antriebsmoduls ist ein Flansch bzw. eine Kolbenführung angeordnet, an dem sich das Betätigungselement entlang bewegt, so dass der Flansch das Betätigungselement bei einer Bewegung auf einer vorgegebenen Bahn führt. Dazu können an dem Betätigungselement Gleitelemente, wie bspw. Kolbenringe angeordnet sein, die eine Reibung zwischen dem Betätigungselement und dem Flansch minimieren. Ferner können an dem Betätigungselement Dichtungselemente, wie bspw. Gummiringe angeordnet sein, die einen Raum unterhalb des Betätigungselements gegenüber Raum über dem Betätigungselement fluiddicht abdichten. Zwischen einem jeweiligen Dichtungselement und dem Flansch kann ein zusätzliches Gleitelement, wie bspw. eine Beschichtung, angeordnet sein, die durch das Dichtungselement auf den Flansch gedrückt wird.

Der Flansch umfasst einen Zuführkanal, wie bspw. eine Bohrung, durch die fließfähige Masse von einer Einlassöffnung zu einer Auslassöffnung strömen kann. Entsprechend hat der Flansch eine Doppelfunktion, nämlich das Betätigungselement bei einer Bewegung in dem Bewegungsraum zu führen und fließfähige Masse, die bspw. von eine Zuführeinheit bereitgestellt wird, durch das Antriebsmodul in bspw. ein Verteilermodul zu leiten.

Entsprechend sind Zuführkanal und Antrieb in dem erfindungsgemäßen Antriebsmodul vereint, so dass das Antriebsmodul besonders kompakt ist, da auf zusätzlichen Bauraum, der bei einer getrennten Anordnung von Zuführkanal und Antrieb erforderlich ist, verzichtet werden kann.

Es kann weiterhin vorgesehen sein, dass das Betätigungselement sich um den Flansch herum erstreckt und der Flansch dazu konfiguriert ist, das Betätigungselement bei einer Bewegung auf einer vorgegebenen Bahn zu führen.

Zum Führen des Betätigungselements auf einer vorgegebenen Bahn kann der Flansch eine Führungsfläche umfassen, die bspw. gerade verläuft. Optional kann die Führungsfläche Anschläge für einen oberen und/oder einen unteren Totpunkt des Betätigungselements umfassen. Alternativ oder zusätzlich kann das Betätigungselement Anschläge für einen oberen und/oder einen unteren Totpunkt des Betätigungselements umfassen, so dass bei einem Kontakt des Anschlags des Betätigungselements mit einem oberen Rand des Bewegungsraums ein Spalt zwischen dem Betätigungselement und dem Rand verbleibt, in den ein Fluid zum Bewegen des Betätigungselement eingeleitet werden kann.

Es kann weiterhin vorgesehen sein, dass der Flansch auf einer dem Betätigungselement zugewandten Seite eine Beschichtung, insbesondere eine PTFE Beschichtung umfasst, die eine Reibung zwischen dem Betätigungselement und dem Flansch minimiert.

Zum Minimieren der Reibung zwischen Flansch und Betätigungselement kann der Flansch beschichtet und/oder poliert sein.

Es kann weiterhin vorgesehen sein, dass das Antriebsmodul eine fluidische Schnittstelle zur Kopplung mit einem fluidischen Antrieb, insbesondere einem hydraulischen Antrieb oder einem pneumatischen Antrieb umfasst, wobei die fluidische Schnittstelle dazu konfiguriert ist, durch den fluidischen Antrieb bereitzustellendes Fluid durch das Antriebsmodul, insbesondere durch den Bewegungsraum zu leiten, um das Betätigungselement in dem Bewegungsraum zu bewegen.

Durch eine fluidische Schnittstelle, wie bspw. ein Einlass für ein Fluid, wie bspw. hydraulische Flüssigkeit oder Pressluft, kann das Betätigungselement in dem Bewegungsraum mit einem Druck beaufschlagt werden, der das Betätigungselement zwischen dem oberen Totpunkt und dem unteren Totpunkt bewegt.

Es kann weiterhin vorgesehen sein, dass die fluidische Schnittstelle einen ersten Antriebskanal umfasst, der in einem Bereich über einem oberen Totpunkt des Betätigungselements mündet und einen zweiten Antriebskanal umfasst, der in einem Bereich unter einem unteren Totpunkt des Betätigungselements mündet.

Durch mehrere Antriebskanäle kann das Betätigungselement zeitversetzt von beiden Seiten mit einem Fluid und entsprechendem Druck beaufschlagt werden, so dass das Betätigungselement sehr schnell zu dem oberen bzw. unteren Totpunkt bewegt werden kann.

Es kann weiterhin vorgesehen sein, dass das Antriebsmodul einen Düsennadelring umfasst, wobei das Betätigungselement mit dem Düsennadelring mechanisch gekoppelt ist und das Betätigungselement mit dem Düsennadelring eine Anzahl Düsennadelaufnahmen zur Aufnahme der Anzahl Düsennadeln bildet.

Mittels eines Düsennadelrings, der mit dem Betätigungselement mechanisch gekoppelt, bspw. verschraubt wird, kann eine Anzahl Düsennadelaufnahmen zur Aufnahme der Anzahl Düsennadeln zwischen dem Betätigungselement und dem Düsennadelring gebildet werden. Dazu können der Düsennadelring und/oder das Betätigungselement Ausnehmungen umfassen, in die jeweilige Düsennadelköpfe der Düsennadeln aufnehmen. Entsprechend kann der Düsennadelring von dem Betätigungselement gelöst werden, um die Düsennadelköpfe in den Ausnehmungen bzw. durch die Ausnehmungen gebildete Düsennadelaufnahmen einzubringen und den Düsennadelring wieder mit dem Betätigungselement zu koppeln.

Durch eine reversible mechanische Kopplung von Betätigungselement und Düsennadelring über bspw. eine Schraubverbindung sind die Düsennadelaufnahmen für Wartungsarbeiten, wie bspw. einen Austausch in den Düsennadelaufnahmen angeordneten Komponenten leicht zugänglich.

Es kann weiterhin vorgesehen sein, dass jeweilige Düsennadeln der Anzahl Düsennadeln innerhalb einer jeweiligen Düsennadelaufnahme entlang ihrer Längsachse verschiebbar gelagert sind.

Durch eine verschiebbare Lagerung der Düsennadeln in den Düsennadelaufnahmen wird ein Bewegungsspiel der Düsennadeln ermöglicht.

Es kann weiterhin vorgesehen sein, dass in einer jeweiligen Düsennadelaufnahme ein Federelement angeordnet ist, das eine Federkraft bereitstellt, die einer Bewegung der Düsennadel in Richtung des Federelements entgegenwirkt.

Durch ein in einer Düsennadelaufnahme angeordnetes Federelement wird eine in der Düsennadelaufnahme angeordnete Düsennadel mit einer Federkraft beaufschlagt, die die Düsennadel auf einen Düsenauslass einer Düse drückt und die Düse dadurch verlässlich und schnell verschließt.

Es kann weiterhin vorgesehen sein, dass das Betätigungselement ein Kolben, insbesondere ein Ringkolben ist, wobei der Bewegungsraum einen Zylinderraum für den Kolben bildet.

Der Bewegungsraum für das Betätigungselement kann durch das Antriebsmodul selbst, d.h. bspw. durch ein Gehäuse oder durch ein Element einer Spritzgussmaschine, wie bspw. eine Aufspannplatte gebildet sein.

Es kann weiterhin vorgesehen sein, dass das Kaltkanalsystem ein Verteilungsmodul umfasst, wobei das Verteilungsmodul eine Anzahl Verteilerkanäle umfasst, wobei jeweilige Verteilerkanäle der Anzahl Verteilerkanäle schräg zwischen einem Verteilereinlass und einem jeweiligen Verteilerauslass verlaufen, und wobei die Verteilerkanäle mit einem geraden Objekt durchstoßbar sind.

Durch schräg verlaufende Verteilerkanäle, die bspw. in einem Winkel kleiner 90° zu einer oberen Kante des Verteilermoduls verlaufen, wird eine Bauhöhe des Verteilermoduls minimiert. Weiterhin wird durch schräg verlaufende Verteilerkanäle eine Reinigung des Verteilermoduls erheblich erleichtert, da die Verteilerkanäle leicht mit einem geraden Objekt durchstoßen und entsprechend gereinigt werden können.

Insbesondere kann vorgesehen sein, dass die Verteilerkanäle durch einen zentralen Verteilereinlass mit fließfähiger Masse versorgt werden und der Verteilereinlass durch den Zuführkanal des Flansches mit fließfähiger Masse versorgt wird.

Bspw. können der Verteilereinlass und die Auslassöffnung des Flansches einen gleichen Querschnitt aufweisen. Optional können der Verteilereinlass und die Auslassöffnung des Flansches mechanisch miteinander gekoppelt, insbesondere ineinander gesteckt und/oder miteinander verschraubt sein.

Es kann vorgesehen sein, dass der Verteilereinlass eine zentrale Öffnung zur Aufnahme von durch die Auslassöffnung bereitgestellter fließfähiger Masse ist, die mit sämtlichen Verteilerkanälen fluidleitend verbunden ist, um die fließfähige Masse in sämtliche Verteilerkanäle zu verteilen.

Durch einen zentralen Verteilereinlass kann die durch die Auslassöffnung des Antriebsmoduls bereitgestellte fließfähige Masse auf eine durch das Verteilungsmodul vorgegebene Verteilerkanalkonfiguration auf jeweilige Düsen verteilt werden, so dass bei einer Änderung einer Düsenanordnung nur die Verteilerkanalkonfiguration angepasst werden muss und das Antriebsmodul unverändert weiterbetrieben werden kann.

Es kann weiterhin vorgesehen sein, dass das Verteilermodul direkt plan oder über eine Trennplatte an dem Antriebsmodul anliegt.

Durch eine plane Anordnung des Verteilermoduls an dem Antriebsmodul wird ein Austreten von fließfähiger Masse zwischen dem Verteilermodul und dem Antriebsmodul minimiert. Ferner führt ein direktes planes Anliegen des Verteilermoduls an dem Antriebsmoduls zu einer thermischen Kopplung von Antriebsmodul und Verteilermodul, wohingegen eine Trennplatte Antriebsmodul und Verteilermodul thermisch entkoppelt.

Durch eine thermische Entkopplung von Antriebsmodul und Verteilermodul kann das Verteilermodul bspw. mittels einer Temperierungsmediums temperiert, insbesondere gekühlt werden, um bspw. durch beim Pressen der fließfähigen Masse in das Verteilermodul angegebene Wärme abzuführen.

Es kann weiterhin vorgesehen sein, dass ein Querschnitt eines Öffnungsrandes des Verteilereinlasses des Verteilermoduls, ein Querschnitt eines Öffnungsrandes eines jeden Verteilerauslasses des Verteilermoduls sowie ein Innendurchmesser eines jeden Verteilerkanals des Verteilermoduls derart aufeinander abgestimmt sind, dass eine axiale Verlängerung einer Wandung eines jeden Verteilerkanals weder den Öffnungsrand des Verteilereinlasses noch einen Öffnungsrand eines jeden Verteilerauslasses schneidet oder berührt.

Es kann weiterhin vorgesehen sein, dass das Verteilermodul monolithisch ist. Ein monolithisches Verteilermodul verhindert ein ungewolltes Eindringen von fließfähiger Masse in Zwischenräume, wie sie bei mehrteiligen Anordnungen auftreten.

Gemäß einen zweiten Aspekt betrifft die vorgestellte Erfindung ein Spritzgusssystem zum Spritzgießen. Das Spritzgusssystem umfasst eine mögliche Ausgestaltung des vorgestellten Kaltkanalsystems, eine Anzahl Düsen, die durch die Düsennadeln des Kaltkanalsystems zu öffnen und zu schließen sind und eine Zuführeinheit, die dazu konfiguriert ist, fließfähige Masse in die Einlassöffnung des Flansches des Kaltkanalsystems zu pressen.

Es kann vorgesehen sein, dass das Spritzgusssystem eine Vielzahl Kaltkanalsysteme und einen Hauptverteiler umfasst, wobei der Hauptverteiler dazu konfiguriert ist, die Vielzahl Kaltkanalsysteme mit fließfähiger Masse zu versorgen.

Ein Spritzgusssystem mit mehreren Kaltkanalsystemen, d.h. ein Multikavitätensystem, kann durch das vorgestellte Kaltkanalsystem besonders kompakt, d.h. mit einer niedrigen Bauhöhe ausgestaltet werden. Dazu kann ein Hauptverteiler bspw. direkt mit jeweiligen Einlässen jeweiliger Kaltkanalsysteme fluidleitend gekoppelt sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schnittdarstellung einer möglichen Ausgestaltung des erfindungsgemäßen Kaltkanalsystems,
- Fig. 2: eine weitere schematische Schnittdarstellung des Kaltkanalsystems gemäß Fig. 1,
- Fig. 3: eine Außenansicht des Kaltkanalsystems gemäß Fig. 2,
- Fig. 4: eine weitere Schnittdarstellung des Kaltkanalsystems gemäß Fig. 2.

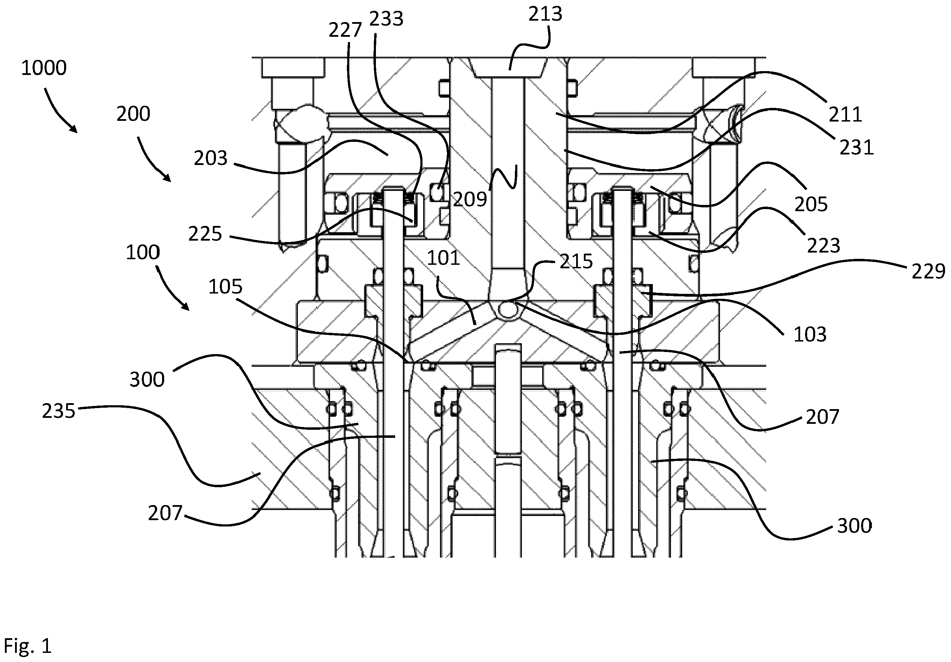

In Fig. 1 ist ein Kaltkanalsystem 1000 dargestellt. Das Kaltkanalsystem 1000 umfasst ein Antriebsmodul 200, einen Bewegungsraum 203, ein Betätigungselement 205, eine Anzahl Düsennadeln 207, einen Zuführkanal 209 und einen Flansch 211.

Der Flansch 211 ist zentral bzw. mittig in dem Bewegungsraum 203 angeordnet und formt einen Zylinder, um den herum das Betätigungselement 205 in Form eines Ringkolbens angeordnet ist. Entsprechend wirkt der Flansch 211 als Führungselement für eine Bewegung des Betätigungselements 205 in dem Bewegungsraum 203.

Der Zuführkanal 209 verbindet eine Einlassöffnung 213 zum Einführen von fließfähiger Masse mit einer Auslassöffnung 215. Entsprechend wirkt der Flansch 211 auch als Zuführeinheit zum Zuführen von fließfähiger Masse zu einem Verteilungsmodul 100, so dass die fließfähige über die Auslassöffnung 215 in einen Verteilereinlass 103 des Verteilungsmoduls 100 geleitet wird. Durch Verteilerkanäle 101 wird die fließfähige Masse zu einem Verteilerauslass 105 eines jeweiligen Verteilerkanals 101 geleitet und in eine entsprechende Düse 300 überführt.

Aufgrund der schrägen Ausrichtung der Verteilerkanäle 101 können diese mit einem geraden Objekt durchstoßen und entsprechend einfach gereinigt werden.

Zum Steuern eines Austritts der fließfähigen Masse aus den Düsen 300 sind die Düsennadeln 207 über Düsennadelköpfe in Düsennadelaufnahmen 225 mit dem Betätigungselement 205 gekoppelt, so dass eine Bewegung des Betätigungselements 205 zu einer Bewegung der Düsennadeln 207 führt und die Düsen 300 geöffnet bzw. geschlossen werden.

Die Düsennadelaufnahmen 225 werden durch Ausnehmungen in einem an dem Betätigungselement 205 angeordneten Düsennadelring 223 und Ausnehmungen in dem Betätigungselement 205 selbst gebildet.

In den Düsennadelaufnahmen 225 sind die Düsennadeln 207 über Federelemente 227 mit einer Federkraft beaufschlagt, die die Düsennadeln 207 in Richtung der Düsen 300 drücken, um ggf. auftretende Längendifferenzen auszugleichen und, dadurch bedingt, die Düsen 300 fest und verlässlich zu verschließen.

Die Düsen 300 sind über ein temperiertes Sammelgehäuse 235 an dem Verteilungsmodul 100 angeordnet.

Die Düsennadeln 207 sind über Dichtungselemente 229, die in das Antriebsmodul 200 und in das Verteilungsmodul 100 eingreifen, geführt bzw. gelagert.

Zur Minimierung einer Reibung zwischen dem Betätigungselement 205 und dem Flansch 211 umfasst der Flansch 211 eine optionale Führungs- und Gleitschicht 231, die eine Bahn, entlang der sich das Betätigungselement 205 bewegt vorgibt und bspw. mit PTFE beschichtet ist.

Ferner umfasst das Betätigungselement 205 optionale Dichtungselemente, wie bspw. Kolbenringe 233, die eine Kontaktfläche zu dem Flansch 211 und entsprechend eine Reibung zwischen dem Flansch 211 und dem Betätigungselement 205 minimieren.

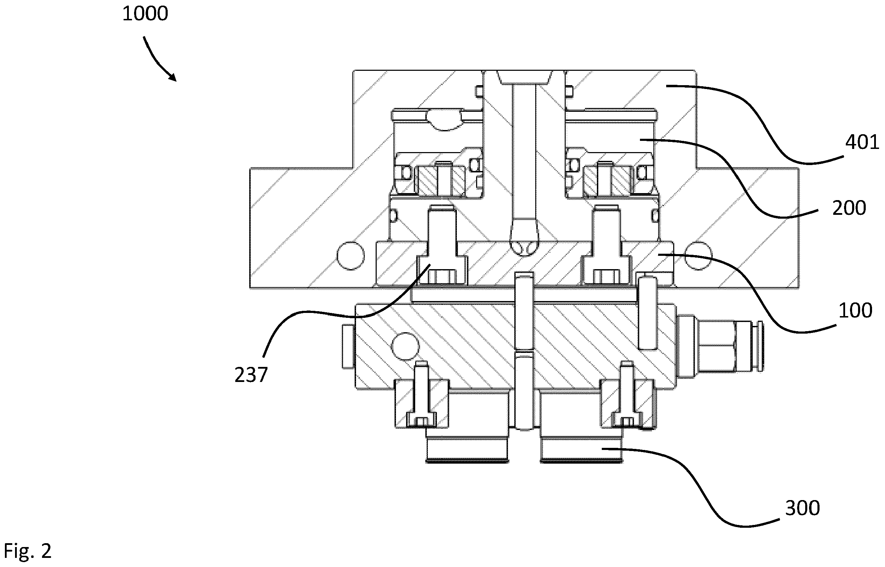

In Fig. 2 ist das Kaltkanalsystem 1000 gemäß Fig. 1 in einer weiteren Ansicht dargestellt. Hier ist erkennbar, dass das Verteilungsmodul 100 über Verschraubungen 237 reversibel lösbar mit dem Antriebsmodul 200 verbunden ist, so dass das Verteilungsmodul 100 von dem Antriebsmodul 200 gelöst und als Einzelteil gereinigt werden kann, indem bspw. die Verteilerkanäle 101 mit einem geraden Objekt, wie bspw. einem Polierstab oder einem Bohrer, durchstoßen werden.

Ferner ist erkennbar, dass das Verteilungsmodul das Antriebsmodul 200 und das Verteilungsmodul 100 in einer Spannplatte 401 eines Spritzgusssystems angeordnet sind, so dass das Spritzgusssystem besonders kompakt ist.

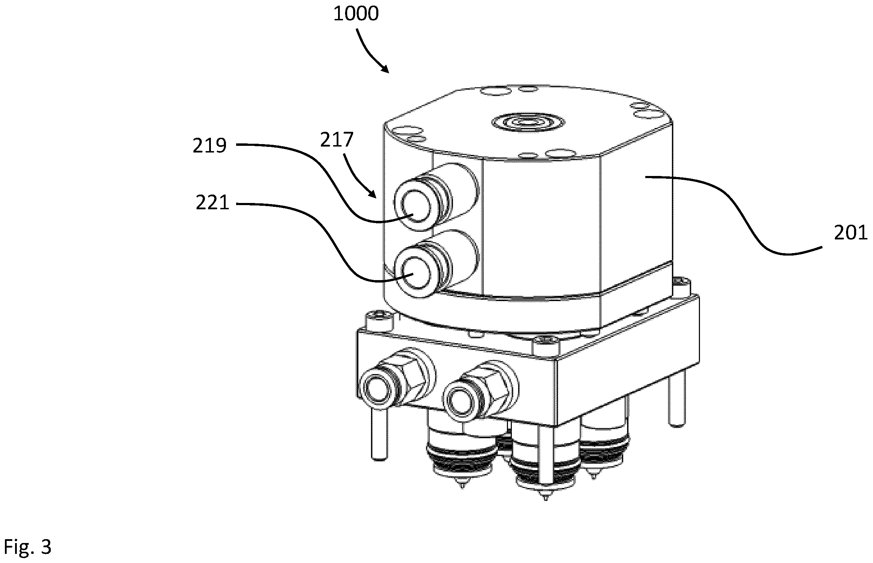

In Fig. 3 ist eine Ausgestaltung des Kaltkanalsystems 1000 in einer Außenansicht dargestellt. Hier ist eine fluidische Schnittstelle 217 mit zwei Antriebskanälen 219 und 221 zu erkennen, durch die der Bewegungsraum 203 mit einem Medium, wie bspw. Druckluft oder Hydraulikflüssigkeit befüllt werden kann, um das Betätigungselement 205 mit einem Druck zu beaufschlagen und zwischen einem oberen Totpunkt und einem unteren Totpunkt zu bewegen und, dadurch bedingt, die Düsennadeln 207 zu bewegen.

Ein Gehäuse 201 umgibt den Bewegungsraum 203 und schützt das Kaltkanalsystem 1000 gegen Umgebungseinflüsse.

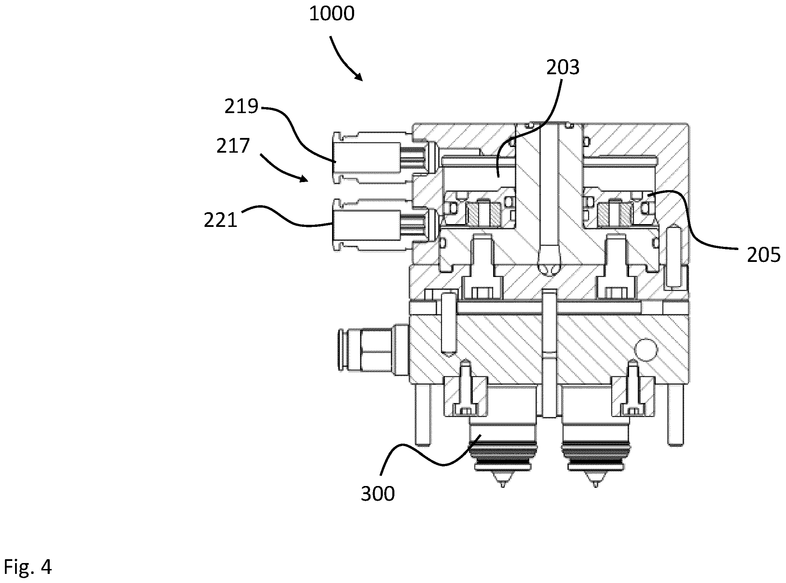

In Fig. 4 ist die fluidische Schnittstelle 217 im Detail erkennbar. Ein oberer Antriebskanal 219 mündet in einen Bereich über dem Bewegungsraum 203 und ein unterer Antriebskanal 221 mündet in einen Bereich unter dem Bewegungsraum 203, so dass bei einer Beaufschlagung des unteren Antriebskanals 221 mit Druckluft das Betätigungselement 205 zu seinem oberen Totpunkt bewegt wird, um die Düsen 300 zu öffnen und bei einer Beaufschlagung des oberen Antriebskanals 219 mit Druckluft das Betätigungselement 205 zu seinem unteren Totpunkt bewegt wird, um die Düsen 300 zu schließen.

Man erkennt, dass ein erfindungsgemäßes Kaltkanalsystem (1000) für ein Spritzgusssystem (400) zum Verarbeiten einer fließfähigen Masse vorgesehen ist, wobei das Kaltkanalsystem (1000) ein Antriebsmodul (200), einen Bewegungsraum (203), ein Betätigungselement (205), eine Anzahl Düsennadeln (207), einen Zuführkanal (209) und einen Flansch (211) umfasst. Der Flansch (211) ist in dem Bewegungsraum (203) ausgebildet und umfasst einen Zuführkanal (209), der eine Einlassöffnung (213) zum Einführen von fließfähiger Masse mit einer Auslassöffnung (215) zum Ausführen von fließfähiger Masse fluidleitend verbindet. Die Düsennadeln (207) sind mit dem Betätigungselement (205) verbunden. Das Betätigungselement (205) ist in dem Bewegungsraum (203) an dem Flansch (211) entlang beweglich angeordnet, so dass eine Bewegung des Betätigungselements (205) zu einer Bewegung der Düsennadeln (207) führt.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1000: Kaltkanalsystem
- 100: Verteilermodul
- 101: Verteilerkanal
- 103: Verteilereinlass
- 105: Verteilerauslass
- 200: Antriebsmodul
- 201: Gehäuse
- 203: Bewegungsraum
- 205: Betätigungselement
- 207: Düsennadel
- 209: Zuführkanal
- 211: Flansch
- 213: Einlassöffnung

- 215: Auslassöffnung
- 217: fluidische Schnittstelle
- 219: erster Antriebskanal
- 221: zweiterAntriebskanal
- 223: Düsennadelring
- 225: Düsennadelaufnahme
- 227: Federelement
- 229: Dichtungselement
- 231: Gleitschicht
- 233: Kolbenring
- 235: Sammelgehäuse
- 237: Verschraubung

## Patentansprüche

1. Kaltkanalsystem (1000) für ein Spritzgusssystem (400) zum Verarbeiten einer fließfähigen Masse,
wobei das Kaltkanalsystem (1000) umfasst:
- ein Antriebsmodul (200),
- einen Bewegungsraum (203),
- ein Betätigungselement (205),
- eine Anzahl Düsennadeln (207),
- einen Zuführkanal (209),
- einen Flansch (211),
wobei der Flansch (211) in dem Bewegungsraum (203) ausgebildet ist und einen Zuführkanal (209) umfasst, der eine Einlassöffnung (213) zum Einführen von fließfähiger Masse mit einer Auslassöffnung (215) zum Ausführen von fließfähiger Masse fluidleitend verbindet,
wobei die Düsennadeln (207) mit dem Betätigungselement (205) verbunden sind, und wobei das Betätigungselement (205) in dem Bewegungsraum (203) an dem Flansch (211) entlang beweglich angeordnet ist, so dass eine Bewegung des Betätigungselements (205) zu einer Bewegung der Düsennadeln (207) führt.

2. Kaltkanalsystem (1000) nach Anspruch 1,
**dadurch gekennzeichnet,**
**dass** das Betätigungselement (205) sich um den Flansch (211) herum erstreckt und der Flansch dazu konfiguriert ist, das Betätigungselement (205) bei einer Bewegung auf einer vorgegebenen Bahn zu führen.

3. Kaltkanalsystem (1000) nach Anspruch 1 oder 2,
**dadurch gekennzeichnet,**
**dass** der Flansch (211) auf einer dem Betätigungselement (205) zugewandten Seite eine Beschichtung (231), insbesondere eine PTFE Beschichtung umfasst, die eine Reibung zwischen dem Betätigungselement (205) und dem Flansch (211) minimiert.

4. Kaltkanalsystem (1000) nach einem der voranstehenden Ansprüche,
**dadurch gekennzeichnet,**
**dass** das Antriebsmodul (200) eine fluidische Schnittstelle (217) zur Kopplung mit einem fluidischen Antrieb, insbesondere einem hydraulischen Antrieb oder einem pneumatischen Antrieb umfasst, wobei die fluidische Schnittstelle (217) dazu konfiguriert ist, durch den fluidischen Antrieb bereitzustellendes Fluid in den Bewegungsraum (203) zu leiten, um das Betätigungselement (205) in dem Bewegungsraum (203) zu bewegen.

5. Kaltkanalsystem (1000) nach Anspruch 4,
**dadurch gekennzeichnet,**
**dass** die fluidische Schnittstelle (217) einen ersten Antriebskanal (219) umfasst, der in einem Bereich über einem oberen Totpunkt des Betätigungselements (205) mündet und einen zweiten Antriebskanal (221) umfasst, der in einem Bereich unter einem unteren Totpunkt des Betätigungselements (205) mündet.

6. Kaltkanalsystem (1000) nach einem der voranstehenden Ansprüche,
**dadurch gekennzeichnet,**
**dass** das Antriebsmodul (200) einen Düsennadelring (223) umfasst, wobei das Betätigungselement (205) mit dem Düsennadelring (223) mechanisch gekoppelt ist und das Betätigungselement (205) mit dem Düsennadelring (223) eine Anzahl Düsennadelaufnahmen (225) zur Aufnahme der Anzahl Düsennadeln (207) bildet.

7. Kaltkanalsystem (1000) nach Anspruch 6,
**dadurch gekennzeichnet,**
**dass** jeweilige Düsennadeln (207) der Anzahl Düsennadeln (207) innerhalb einer jeweiligen Düsennadelaufnahme (225) entlang ihrer Längsachse verschiebbar gelagert sind.

8. Kaltkanalsystem (1000) nach Anspruch 7,
**dadurch gekennzeichnet,**
**dass** in einer jeweiligen Düsennadelaufnahme (225) ein Federelement (227) angeordnet ist, das eine Federkraft bereitstellt, die einer Bewegung der Düsennadel (207) in Richtung des Federelements (227) entgegenwirkt.

9. Kaltkanalsystem (1000) nach einem der voranstehenden Ansprüche,
**dadurch gekennzeichnet,**
**dass** das Betätigungselement (205) ein Kolben, insbesondere ein Ringkolben ist, wobei der Bewegungsraum (203) einen Zylinderraum für den Kolben bildet.

10. Kaltkanalsystem (1000) nach einem der voranstehenden Ansprüche,
**dadurch gekennzeichnet,**
**dass** das Kaltkanalsystem (1000) ein Verteilungsmodul (100) umfasst,
wobei das Verteilungsmodul (100) eine Anzahl Verteilerkanäle (101) umfasst, wobei jeweilige Verteilerkanäle (101) der Anzahl Verteilerkanäle (101) schräg zwischen einem Verteilereinlass (103) und einem jeweiligen Verteilerauslass (105) verlaufen, und wobei die Verteilerkanäle (101) mit einem geraden Objekt durchstoßbar sind.

11. Kaltkanalsystem (1000) nach Anspruch 10,
**dadurch gekennzeichnet,**
**dass** der Verteilereinlass (103) eine zentrale Öffnung zur Aufnahme von durch die Auslassöffnung (215) bereitgestellter fließfähiger Masse ist, die mit sämtlichen Verteilerkanälen (101) fluidleitend verbunden ist, um die fließfähige Masse in sämtliche Verteilerkanäle (101) zu verteilen.

12. Kaltkanalsystem (1000) nach einem der Ansprüche 10 oder 11,
**dadurch gekennzeichnet,**
**dass** das Verteilermodul (100) direkt plan oder über eine Trennplatte an dem Antriebsmodul (200) anliegt.

13. Kaltkanalsystem (1000) nach Anspruch 10 oder 11,
**dadurch gekennzeichnet,**
**dass** ein Querschnitt eines Öffnungsrandes des Verteilereinlasses (103) des Verteilermoduls (100), ein Querschnitt eines Öffnungsrandes eines jeden Verteilerauslasses (105) des Verteilermoduls (100) sowie ein Innendurchmesser eines jeden Verteilerkanals (101) des Verteilermoduls (100) derart aufeinander abgestimmt sind, dass eine axiale Verlängerung einer Wandung eines jeden Verteilerkanals (101) weder den Öffnungsrand des Verteilereinlasses (103) noch einen Öffnungsrand eines jeden Verteilerauslasses (105) schneidet oder berührt.

14. Kaltkanalsystem (1000) nach einem der Ansprüche 10 bis 12,
**dadurch gekennzeichnet,**
**dass** das Verteilermodul (100) monolithisch ist.

15. Spritzgusssystem zum Spritzgießen,
wobei das Spritzgusssystem umfasst:
- ein Kaltkanalsystem (1000) nach einem der Ansprüche 1 bis 13,
- eine Anzahl Düsen (300), die durch die Düsennadeln (207) des Kaltkanalsystems (1000) zu öffnen und zu schließen sind,
- eine Zuführeinheit, die dazu konfiguriert ist, fließfähige Masse in die Einlassöffnung (213) des Flansches (211) des Kaltkanalsystems (1000) zu pressen.

16. Spritzgusssystem nach Anspruch 15,
**dadurch gekennzeichnet,**
**dass** das Spritzgusssystem eine Vielzahl Kaltkanalsysteme (1000) und einen Hauptverteiler umfasst,
wobei der Hauptverteiler dazu konfiguriert ist, die Vielzahl Kaltkanalsysteme (1000) mit fließfähiger Masse zu versorgen.
